# EUROPEAN PATENT APPLICATION

(11) **EP 3 575 138 A1**
(43) Date of publication of application: **04.12.2019**
(21) Application number: 19466005.6
(22) Date of filing: 10.05.2019
(51) Int. Cl.: B60L 53/30, B60M 1/34, B60M 1/36

(54) **DEVICE FOR TRANSFER OF INCREASED ELECTRIC CURRENT TO A STATIONARY TROLLEYBUS, PARTICULARLY FOR RECHARGING TRACTION BATTERIES**

(30) Priority: 14.05.2018 CZ 20180222
(71) Applicant: Faiveley Transport Czech a.s., 326 00 Plzen (CZ)
(72) Inventor: Kucera, Lukas, 312 00 Plzen (CZ); Lorenc, Tomas, 301 00 Plzen (CZ)
(74) Representative: Polacek, Jiri

(57) **Abstract**

The invention relates to a device for transfer of increased current to a stationary trolleybus, particularly for recharging traction batteries. On both sides of an overhead wire (T), strips (2) are provided on a common frame. At least one of the strips (2) can be brought closer to the other one, both strips (2) being connected to a lead (21) for electric current supply.

## Description

### Technical Field

The invention relates to a device for transfer of increased current to a stationary trolleybus, particularly for recharging traction batteries.

### Background Art

Electricity is supplied to trolleybus from overhead wires, where a groove in a carbon insert touches against each wire. A solution described in patent no. CS 262717 is known, wherein a pair of clamps is provided for retaining two overhead wire ends being connected. The clamps are mutually connected with strips whose bottom-facing sides are adapted for contact with a current collector. The strips extend into the space between the edges of a shoe body, inside which the carbon insert is installed and in which the overhead wire runs. This configuration provides a smooth transition from one overhead wire end to the other at their point of connection. The electric current transfer between the strips and the carbon insert corresponds to the electric current transfer between the overhead wire and the groove made in the carbon insert. Nevertheless, a transfer of increased current for optimal recharging of traction batteries is technically demanding. With development of trolleybuses equipped with traction batteries and with an off-wire capability, the required amount of the charging current exceeds the transfer capacity between the overhead wire and the carbon insert. Battery trolleybuses are being developed, in which the electric current transfer requirement is much larger than the capacity provided by the contact between the carbon insert and the overhead wire. Moreover, local overheating of the overhead wire occurs at the point of contact between the overhead wire and the carbon insert, which may result in overhead wire breakage.

### Disclosure of Invention

This device is intended for transfer of increased electric current to a stationary trolleybus, particularly for recharging traction batteries. On both sides of an overhead wire, strips are provided on a common frame, where at least one of the strips can be brought closer to the other. The strips are connected to a lead for electric current supply. When the strips are brought closer to each other, a trolley head slides into the gap between the strips and comes into contact with them, preferably via outer surfaces of a shoe body which contains the carbon insert. The electric current is transferred from the strips to the shoe body without a risk of overhead wire overheating at the point of contact with the carbon insert.

In order to maintain the device in a precisely-defined position, the frame is provided with hangers by which it is suspended from a structure that supports the overhead network.

In a preferred arrangement, an appropriate pressure exerted by the strips on the trolley head, which is mounted on a trolley pole, and therefore a reliable transfer of current, is secured by a spring or a down-pressure element which is disposed between at least one of the strips and the frame.

Preferably, the device is protected from weather by a cover provided on the frame.

In order to improve reliability, a current sensor disposed on the frame is preferred for indicating conductive connection between the trolley head and the strips.

### Description of Drawings.

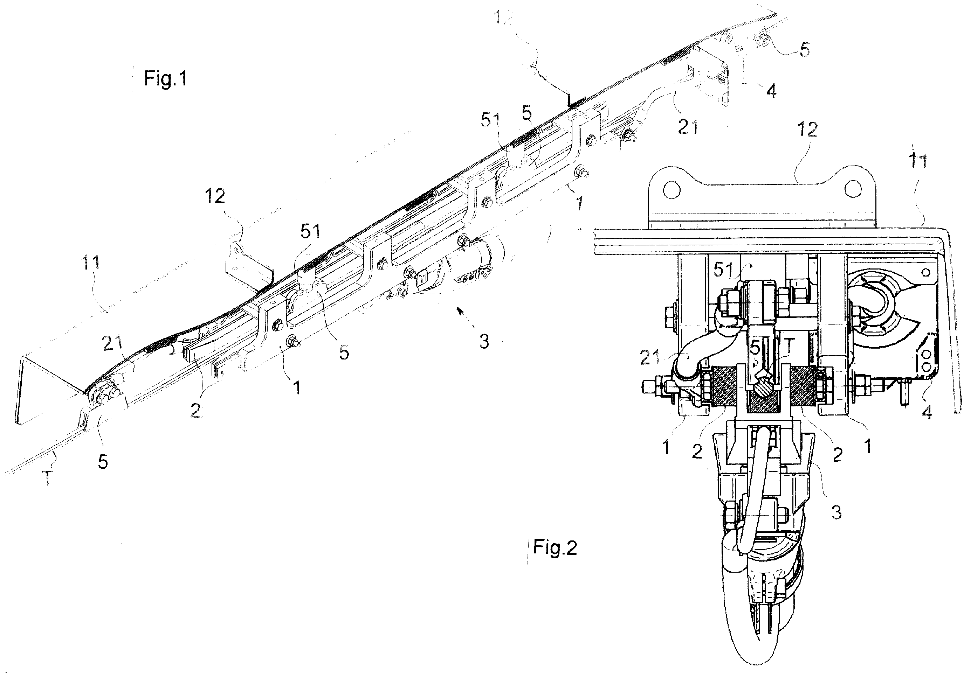

A general axonometric projection of a broken-out section of the device according to the invention is shown in Fig. 1. A transverse section through the device is presented in Fig. 2.

### Best Mode for Carrying out the Invention

On both sides of an overhead wire T, strips 2 are provided on a common frame 1 and connected to a lead 21 for electric current supply. Strips 2 can be made of various conductive materials, such as copper, bronze, carbon and various kinds of hard carbon. At least one of the strips 2 can be brought closer to the other one. In the best mode for carrying out this inventions, both strips 2 can be brought closer to each other. The frame 1 is provided with hangers 12, by which it is suspended from a structure of an overhead network. This arrangement enables the device to be installed anywhere along the overhead wire T, including retrofitting to an existing overhead wire. Between the strips 2 and the frame 1, a spring or a down-pressure element, possibly in the form of a pneumatic or hydraulic cylinder, is disposed. The design solution for exerting pressure by the strips 2 is outside the scope of this invention. The overhead wire T is held by holders 5. On both ends of the frame 1, holders 5 are affixed to the overhead wire T and provided with a lead 21, which is connected to the overhead wire T. The lead 21 for electric current supply can also be routed away from the overhead wire T. One of the leads 21 is fitted with a current sensor 4, which detects connection between the strips 2 and the trolley head 3 of a current collector, as well as the position of the trolley head 3 on the overhead wire T. Between the outermost holders 5, the overhead wire T is stabilized with holders 5 which are attached directly to the frame 1 via supports 51. The frame 1 is provided with a cover 11 which reduces the effects of weather.

The trolley head 3 mounted on a trolley pole slides along the overhead wire T of the overhead network, depending on the travel of a trolleybus. In the arrangement, where springs are disposed between the strips 2 and the frame 1, the trolley head 3 slides into the gap between the strips 2 and pushes them apart. In the embodiment displayed, the trolley head 3 is in contact with the strips 2 via a shoe body for the carbon insert. It may also come into contact the strips 2 via the carbon insert holder, which is made of metal as well. This starts the process of battery recharging, which is detected by the current sensor 4. After the trolley head 3 slides out from between the strips 2, the strips 2 are brought to each other by the action of the springs. In an arrangement where pneumatically or hydraulically-operated down pressure elements are disposed between the strips 2 and the frame 1, the strips 2 are brought towards each other by the down-pressure elements after the trolleybus comes to a full stop, which causes the strips 2 to touch the outer surfaces of the metal trolley head 3. Once the required current for battery charging has been transferred, the strips 2 are brought apart by the down-pressure elements and the trolleybus can drive on.

## Claims

1. A device for transfer of increased electric current to a stationary trolleybus, particularly for recharging traction batteries, **characterized in that** on both sides of an overhead wire (T) strips (2) are provided on a common frame (1), where at least one of the strips (2) can be brought closer to the other and the strips (2) are connected to a lead (21) for electric current supply.

2. The device according to claim 1, **characterized in that** the frame (1) is provided with hangers (12).

3. The device according to claim 1 or 2, **characterized in that** a spring is disposed between at least one of the strips (2) and the frame (1).

4. The device according to claim 1 or 2, **characterized in that** a down-pressure element is disposed between at least one of the strips (2) and the frame (1).

5. The device according to claim 1, 2, 3 or 4 **characterized in that** the frame (1) is provided with a cover (11).

6. The device according to claims 1, 2, 3, 4 or 5 **characterized in that** a current sensor (4) is disposed on the frame (1).
